# EUROPEAN PATENT APPLICATION

(11) **EP 4 604 407 A1**
(43) Date of publication of application: **20.08.2025**
(21) Application number: 24158446.5
(22) Date of filing: 19.02.2024
(51) Int. Cl.: H04B 5/45, G06F 13/40, G06F 13/42, G06K 7/00, G06K 19/07, H04B 5/77, H04B 5/79

(54) **TAG WITH ON-CHIP COMMAND INTERPRETER**

(71) Applicant: Renesas Design Austria GmbH, 8041 Graz (AT)
(72) Inventor: Weissengruber, Patrick, 8041 Graz (AT)
(74) Representative: Schwarz & Partner Patentanwälte GmbH

(57) **Abstract**

A System (13) that comprises a reader (2) and a tag (14) and an IoT device (4) to enable exchange of data and/or energy between the reader (2) and the IoT device (4) using a wireless interface (5) between the reader (2) and the tag (14) and a wired interface (6) between the tag (14) and the IoT device (4), which tag (14) comprises:
a wireless interface module with a receiver module (15) and a transmitter module (16), which
receiver module (15) is built to receive energy and reader data from a magnetic field (17) in the RF frequency area of 1 MHz to 100 MHz generated by the reader (2) and which is built to store received reader data in a tag memory (18) of the tag (14) and which
transmitter module (16) is built to modulate the magnetic field (17) to transmit device data stored in the tag memory (18) to the reader (2) and which tag (14) furthermore comprises

a wired interface module (21) with a cable connector (19) to connect a cable (20) between the tag (14) and the IoT device (4) to communicate energy and/or reader data and/or device data between the tag (14) and the IoT device (4), and which tag (14) furthermore comprises a processing unit (22) with a first non-volatile memory area (23) to store application code (24) in binary form, wherein the processing unit (22) is built to process the application code (24) to enable exchange of energy and/or reader data and/or device data between the reader (2) and
the IoT device (4), wherein that the processing unit (22) of tag (14) processes an update function to update the application code (24) in the first non-volatile memory area (23) with a computer (25) of the system (13) connected to the cable connector (19) and that the tag (14) comprises a second non-volatile memory area (26) which stores a pre-compiled library of commands (27) used in the application code (24) for an on-chip command interpreter.

## Description

### FIELD OF THE INVENTION

The present invention relates to a system that comprises a reader and a tag and an IoT device to enable exchange of data and/or energy between the reader and the IoT device using a wireless interface between the reader and the tag and a wired interface between the tag and the IoT device, which tag comprises:
a wireless interface with a receiver module and a transmitter module, which
   receiver module is built to receive energy and reader data from a magnetic field in the RF frequency area of 1 MHz to 100 MHz generated by the reader and which is built to store received reader data in a tag memory of the tag and which
   transmitter module is built to modulate the magnetic field to transmit device data stored in the tag memory to the reader and which tag furthermore comprises
a wired interface with a cable connector to connect a cable between the tag and the IoT device to communicate energy and/or reader data and/or device data between the tag and the IoT device, and which tag furthermore comprises
a processing unit with a first non-volatile memory area to store application code in binary form, wherein the processing unit is built to process the application code to enable exchange of energy and/or reader data and/or device data between the reader and the IoT device.

### BACKGROUND OF THE INVENTION

Patent EP 3 160 165 B1 discloses a mobile phone with a Near Field Communication (NFC) functionality that acts as reader to communicate with a passive tag. NFC technology has been developed by an industry consortium under the name of NFC Forum (http://www.nfc-forum.ofg) and derives from RFID technology. NFC components may operate in a "Reader" mode, a "Card Emulation" mode and a "Device" mode as standardized in ISO 18.092. An NFC component emits via its Near Field Communication contactless interface magnetic fields, sends data by modulating the amplitude of the magnetic field, and receives data by load modulation and inductive coupling.

With the introduction of dynamic NFC Tags a few years ago, a high demand for different applications in the "Internet of Things" (IoT) field arose. Such NFC-based IoT applications are for example reading data from sensors or energy harvesting (e.g. NFC Tag converts inducted energy into an electrical current to supply or wirelessly charge other devices) or authentication or theft-protection and many applications more.

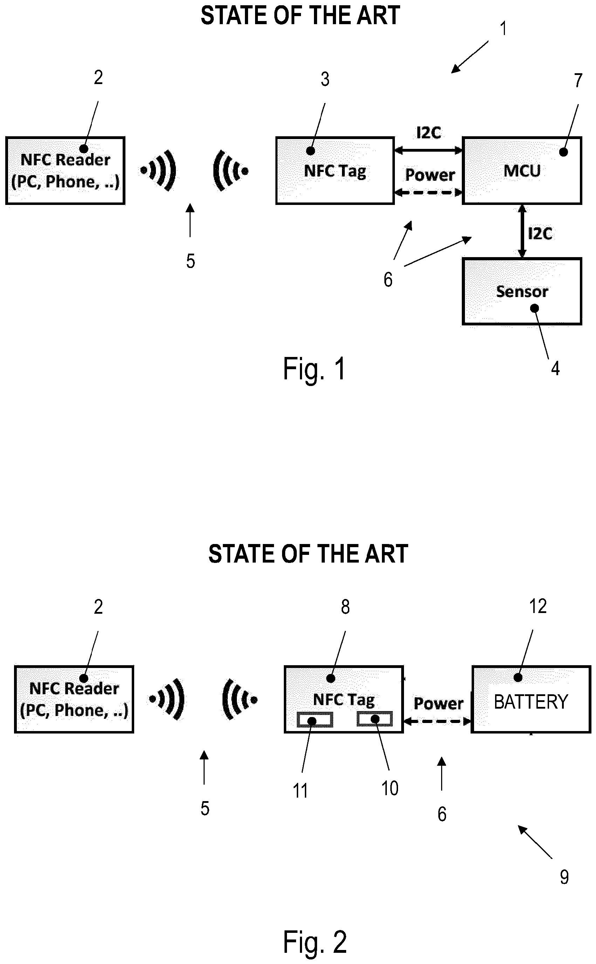

Figure 1 shows a system 1, according to the state of the art, that comprises a mobile phone with a reader 2 and a passive tag 3 and an IoT device 4, which is realized as temperature sensor, to enable the mobile phone to read-out and display the temperature sensed by the remote temperature sensor. To achieve that, a wireless interface 5, based on the NFC technology, between the reader 2 and the tag 3 and a wired interface 6, realized as I2C interface, between the tag 3 and the IoT device 4 is used. As tag 3 is a general purpose NFC tag without any possibility to adopt its functionality to a special application and as the IoT device 4 is a general purpose temperature sensor, that needs to be read out based on its specification, a micro-controller unit 7 is installed with its I2C interface between the tag 3 and the IoT device 4. Micro-controller unit 7 is a general purpose micro-controller and quite often the three integrated circuits (tag 3, micro-controller unit 7, IoT device 4) are from three different manufacturers and the provider of system 1 needs to deal with all these specifications and in particular with a high-level script editor like computer language C++ and a compiler of the manufacturer of the micro-controller unit 7. This makes it difficult to realize such a state of the art system 1.

To ease the realization of such systems, the applicant launched a tag 8 (Type: Renesas PTX30W) to enable state of the art system 9 for a particular IoT application shown in figure 2. Tag 8 comprises an integrated micro-controller unit 10 and a first non-volatile memory 11 to store application code for the particular IoT application in binary form. The integrated micro-controller unit 10, that processes the application code, adopts tag 8 to the IoT application to charge a battery 12 with the energy provided by the mobile phone transmitted via the wireless interface 5 and wired interface 6. The application code stored in the first non-volatile memory 11 has been drafted by the manufacturer of tag 8 and has been stored into the first non-volatile memory 11 during production of the integrated circuit of tag 8. For an implementer of this IoT application to charge battery 12, system 9 compared to system 1 comprises the advantage that no external micro-controller unit 7 is needed and there is no need to program it, but there is still a need for more flexibility to implement all kind of different IoT applications with a single type of tag 8. As a detailed analyze of the application code stored in first non-volatile memory 11 could reveal company confidential technology, like access to internal registers, and as a hacker could use an amended version of the application code to read out confidential information of the transmitted data, the manufacturer of tag 8 does not enable a firmware update of the application code stored in the first non-volatile memory 11.

### SUMMARY OF THE INVENTION

It is an object of the invention to provide a system and a tag with more flexibility to ease implementation of all kind of different IoT applications.

This object is achieved with a tag that comprises an update function to update the application code in the first non-volatile memory area with a computer of the system connected to the cable connector and that the tag comprises a second non-volatile memory area which stores a pre-compiled library of commands, which may be used or are used in the application code for an on-chip command interpreter. With this split of the non-volatile memory in the first non-volatile memory area, that may be updated by an implementer of an IoT application with the computer with a firmware update, and the second non-volatile memory area, that realizes the hardware related access to registers or memory blocks with stored confidential data, a lot of advantages are achieved. An implementer of an IoT application has the flexibility to design his own application with an application code drafted on the computer and stored with a firmware update in the first non-volatile memory area. The manufacturer of the tag can keep his hardware related company confidential technology, because the hardware related processing of commands in the application code is realized with the pre-compiled library of commands stored in the second non-volatile memory area, which may not be updated at all or which may only be updated based on a prior authorization with e.g. a security code to enable a special update function of the tag. This increases the security level of the tag against hackers, as it is not possible for hackers to use a firmware update to get access to registers or memory areas with secret data transmitted between the reader and the tag and the IoT device and secret data stored in the tag. Furthermore, no real compiler (e.g. C-Compiler) is needed to develop IoT applications, as the script language is reduced to a few commands (e.g. read I2C), programming of IoT applications is therefore much simpler.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 and 2 show systems of IoT device applications according to the state of the art.
Figure 3 shows a system and tag according to an embodiment of the invention.

### DETAILED DESCRIPTION OF EMBODIMENTS

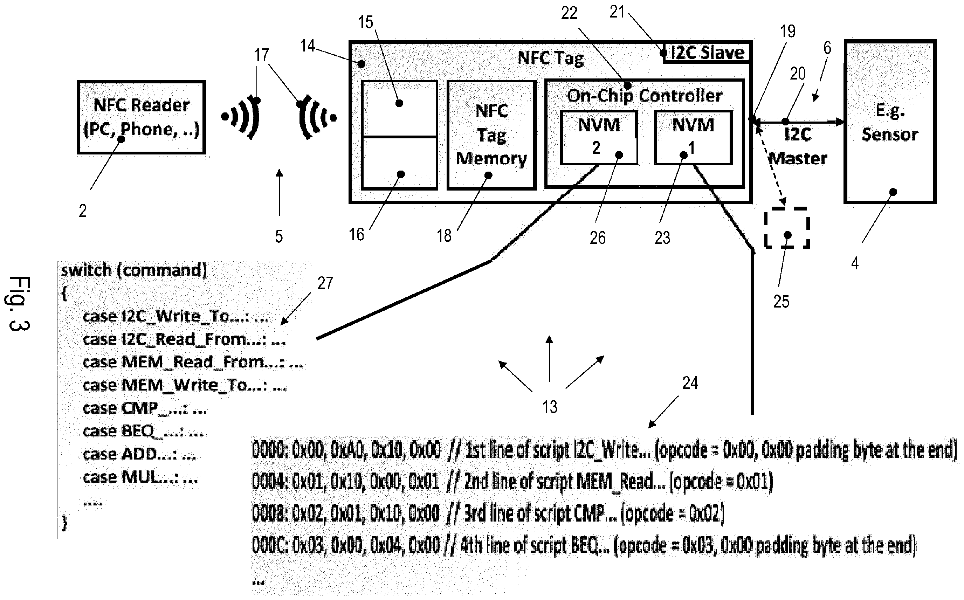

Figures 1 and 2 show systems 1 and 9 of IoT device applications according to the state of the art. Figure 3 shows a system 13 of an IoT application according to the invention, wherein the same reference numbers are used for blocks with the same function as in figures 1 and 2. System 13 comprises a mobile phone with a reader 2 and comprises a passive tag 14 and comprises an IoT device 4, realized as temperature sensor, to enable the mobile phone to read-out and display the temperature sensed by the remote temperature sensor. In other embodiments of the invention IoT device 4 could be realized as humidity sensor or heart frequence sensor, just to name some, or could be realize as battery 12, to be charged by the mobile phone in the IoT application. All these different IoT applications may be realized with tag 14 of system 13, with an firmware update of the application code in tag 14. In other embodiments of the invention reader 2 could be implemented in any other device like a tablet or a computer or a watch, just to name some.

System 13 enables the exchange of reader data, originally provide by reader 2, and the exchange of IoT data, originally provided by IoT device 4, and/or the transfer of energy between the reader 2 and the IoT device 4 using a wireless interface 5 between the reader 2 and the tag 14 and using a wired interface 6 between the tag 14 and the IoT device 4. Wireless interface 5 could be realized as any wireless interface known to a person skilled in the art that uses a magnetic field in the RF frequency area of 1 MHz to 100 MHz. Wired interface 6 could be realized as any wired interface known to a person skilled in the art like for instance an I2C interface ("Inter-Integrated Circuit", well-known company standard of Philips and other companies) or SPI ("Serial Peripheral Interface") or UART ("Universal Asynchronous Receiver/Transmitter") or USB ("Universal Serial Bus"), just to name some.

Tag 14 realizes the wireless interface 5 with a receiver module 15 and a transmitter module 16, which receiver module 15 is built to receive energy and reader data from a magnetic field 17 in the RF frequency area of 1 MHz to 100 MHz generated by the reader 2. Tag 14 is realized as passive tag that harvests energy from magnetic field 17 to receive reader data modulated into magnetic field 17 with receiver module 15 and to transmit device data with transmitter module 16. In this embodiment magnetic field 17 is generated by reader 2 with a frequency of 13.56 MHz and communication protocols between reader 2 and tag 14 comply to "Type Tag" protocols defined by the NFC Forum. Tag 14 furthermore comprises a tag memory 18, realized as volatile memory and built to store from the reader 2 received reader data in the tag memory 18 of the tag 14. Transmitter module 16 is built to modulate the magnetic field 17 with load modulation to transmit device data stored in the tag memory 18 to the reader 2.

Tag 14 furthermore comprises a cable connector 19 to connect a cable 20 between tag 14 and IoT device 4 to enable the wired interface 6 to communicate energy and/or reader data and/or device data between tag 14 and IoT device 4. To realize the signals and protocol of the I2C wired interface 6, tag 14 comprises an I2C module 21.

Tag 14 furthermore comprises an on-chip micro-controller unit 22 with a first non-volatile memory area 23 to store application code 24 in binary form. The micro-controller unit 22 is built to process the application code 24 to enable exchange of energy and/or reader data and/or device data between the reader 2 and the IoT device 4. Different application codes 24 adopt tag 14 for different IoT applications to e.g. read device data from a sensor or to load energy to charge a battery.

Micro-controller unit 22 of tag 14 furthermore processes an update function software to update the application code 24 stored in the first non-volatile memory area 23 with a computer 25 of the system 13 connected to the cable connector 19 of tag 14. Computer 25 has to be connected instead of IoT device 4 to connector 19 and the update function software has to be processed by micro-controller unit 22 to enable the download function with a download of firmware (new application code 24) from the computer 25 into the first non-volatile memory area 23 to adopt general purpose tag 14 for a particular IoT application. As computer 25 is only connected to cable connector 19 during the update function, computer 25 is displayed with dotted lines in figure 3.

Tag 14 furthermore comprises a second non-volatile memory area 26 realized in the same non-volatile memory of micro-controller unit 22, which second non-volatile memory area 26 stores a pre-compiled and pre-loaded library of commands 27 used in the application code 26 for an on-chip command interpreter. Such a pre-compiled library command 27 for instance could be a "I2C_Write_To (@Address XY)" command to be used in the application code 26 of tag 14. If application code 26 calls this command, micro-controller unit 22 processes the close to the hardware related binary code stored in the second non-volatile memory area 26 to use I2C module 21 to for instance write reader data (e.g. configuration data) to a particular address of the memory of IoT device 4 (e.g. sensor) indicated in the command.

On-chip script interpreters are known to a person skilled in the art in the technology area of general purpose computers. A typical example here is "MicroPython" which implements a Python-interpreter for embedded systems or micro-controller units. While Python implements full flexibility and support of a real programming language, it has also very high requirements regarding Flash and RAM memory consumptions for the compiled image. Such requirements can't usually not be fulfilled by small (and cost-efficient) devices such as NFC Tags, that's why a person skilled in the art would not have implemented such an on-chip script interpreter in tag 14. Furthermore such known general purpose Python-interpreter would process potential security relevant information, what should be avoided. The implemented pre-compiled and pre-loaded library of commands 27 in second non-volatile memory area 26 differ from such known on-chip script interpreters in the way that the compiled image consumes less memory and fulfills all security relevant issues.

Based on the inventive concept, only the application code 24 stored in the first non-volatile memory area 23 may be updated by a system integrator of system 13 to adopt general purpose tag 14 to a particular IoT application. The pre-compiled library commands 27 stored in the second non-volatile memory area 26 are either stored one time only during manufacturing of tag 14 by the manufacturer of tag 14 or have a very high security level of protection to enable a later-on amendment/update by the manufacturer. This enables to adopt general purpose tag 14 for all kind of IoT applications by an firmware update of the application code 24, while tag 14 is well protected against a hacker as that part of the code/software that is hardware related is secured in the in the second non-volatile memory area 26.

A typical use case of system 13 could be that the user of mobile phone wants to know the temperature sensed by the temperature sensor of IoT device 4. An appropriate app of mobile phone sends a reader data request via the magnetic field 17 generated by reader 2. Receiver module 15 demodulates the reader data and stores them in tag memory 18 of the tag 14. Micro-controller unit 22 processes application code 24 stored in the first non-volatile memory area 23, which application code 24 uses commands stored pre-compiled and pre-loaded in the library of commands 27 in second non-volatile memory area 26 to fulfil the request and read device data (actual temperature) of IoT device 4 using the wired interface 6 and transmit them via wireless interface 5 to the mobile phone. Using the update function of tag 14, a firmware update of the application code 24 may be processed by system integrator of system 13 using computer 15 to e.g. enable to use a different IoT device (e.g. a temperature sensor of a different manufacturer) which stores the actual sensed temperature in a different memory area.

Computer 5 furthermore processes a high-level script editor to enable the system integrator to draft application code 24 including commands of the pre-compiled library stored in the second non-volatile memory 27. Computer 5 is built to convert the high-level script into the binary form of the application code 24 to be stored in the first non-volatile memory area 23. This enables ease of use for the system integrator of system 13.

Micro-controller unit 22 that processes the update function of tag 14 is built to protect the second non-volatile memory area 26 from unauthorized updates or prohibits updates at all. A security code may be defined to enable access to process a firmware update of the pre-compiled library of commands 27 stored in the second non-volatile memory area 26. This increases the security level against hackers. The use of the update function of tag 14 to update application code 24 may as well be protected by a security code.

Tag 14 furthermore may comprise only one physical non-volatile memory to realize the first non-volatile memory area 23 and the second non-volatile memory area 26 or alternative may comprise two separate physical non-volatile memories.

Micro-controller unit 22 of tag 14 furthermore is built to start the processing of the application code 24 based on reader data received from the reader 2 with the receiver module 15. In another embodiment of the invention micro-controller unit 22 of tag 14 may be built to continuously process the application code 24 to enable exchange of data and/or energy between the reader 2 and the IoT device 4.

Reader 2 of system 13 is built to generate and process and the tag 14 is built to process the magnetic field 17 in the RF frequency area with a frequency of 13.56MHz to process Near Field Communication type applications. This enables a broad range of IoT applications.

In another embodiment of the invention, the system could, instead of passive tag 14, comprise an active tag that is powered by its own battery.

## Claims

1. System (13) that comprises a reader (2) and a tag (14) and an IoT device (4) to enable exchange of data and/or energy between the reader (2) and the IoT device (4) using a wireless interface (5) between the reader (2) and the tag (14) and a wired interface (6) between the tag (14) and the IoT device (4), which tag (14) comprises:
a wireless interface module with a receiver module (15) and a transmitter module (16), which
receiver module (15) is built to receive energy and reader data from a magnetic field (17) in the RF frequency area of 1 MHz to 100 MHz generated by the reader (2) and which is built to store received reader data in a tag memory (18) of the tag (14) and which
transmitter module (16) is built to modulate the magnetic field (17) to transmit device data stored in the tag memory (18) to the reader (2) and which tag (14) furthermore comprises
a wired interface module (21) with a cable connector (19) to connect a cable (20) between the tag (14) and the IoT device (4) to communicate energy and/or reader data and/or device data between the tag (14) and the IoT device (4), and which tag (14) furthermore comprises a processing unit (22) with a first non-volatile memory area (23) to store application code (24) in binary form, wherein the processing unit (22) is built to process the application code (24) to enable exchange of energy and/or reader data and/or device data between the reader (2) and the IoT device (4), **characterized in that**
the processing unit (22) of tag (14) processes an update function to update the application code (24) in the first non-volatile memory area (23) with a computer (25) of the system (13) connected to the cable connector (19) and that the tag (14) comprises a second non-volatile memory area (26) which stores a pre-compiled library of commands (27) used in the application code (24) for an on-chip command interpreter.

2. System (13) according to claim 1, wherein the computer (5) processes a high-level script editor to draft application code (24) including commands of the pre-compiled library stored in the second non-volatile memory (27) and which computer (5) is built to convert the high-level script into the binary form of the application code (24) to be stored in the first non-volatile memory area (23).

3. System (13) according to claim 1 or 2, wherein the processing unit (22) of tag (14) that processes the update function is built to protect the second non-volatile memory area from unauthorized updates or prohibits updates at all.

4. System (13) according to any of the claims 1 to 3, wherein the tag (14) comprises only one physical non-volatile memory to realize the first non-volatile memory area (23) and the second non-volatile memory area (26).

5. System (13) according to any of the claims 1 to 4, wherein processing unit (22) is built to start the processing of the application code (24) based on reader data received from the reader (2) with the receiver module (15) or wherein the processing unit (22) is built to continuously process the application code (24) to enable exchange of data and/or energy between the reader (2) and the IoT device (4).

6. System (13) according to any of the claims 1 to 5, wherein the reader (2) is built to generate and process and wherein the tag (14) is built to process the magnetic field (17) in the RF frequency area with a frequency of 13.56MHz to process Near Field Communication type applications.

7. Tag (14) with a wireless interface (15, 16) and a wired interface (21, 19), **characterized in, that** the tag (14) is realized as claimed in one of the claims 1 to 6.

## Amended claims

### Amended claims in accordance with Rule 137(2) EPC.

1. System (13) that comprises a reader (2) and a tag (14) and an IoT device (4) to enable exchange of data and/or energy between the reader (2) and the IoT device (4) using a wireless interface (5) between the reader (2) and the tag (14) and a wired interface (6) between the tag (14) and the IoT device (4), which tag (14) comprises:
a wireless interface module with a receiver module (15) and a transmitter module (16), which
receiver module (15) is built to receive energy and reader data from a magnetic field (17) in the RF frequency area of 1 MHz to 100 MHz generated by the reader (2) and which is built to store received reader data in a tag memory (18) of the tag (14) and which
transmitter module (16) is built to modulate the magnetic field (17) to transmit device data stored in the tag memory (18) to the reader (2) and which tag (14) furthermore comprises
a wired interface module (21) with a cable connector (19) to connect a cable (20) between the tag (14) and the IoT device (4) to communicate energy and/or reader data and/or device data between the tag (14) and the IoT device (4), and which tag (14) furthermore comprises a processing unit (22) with a first non-volatile memory area (23) to store application code (24) in binary form, wherein the processing unit (22) is built to process the application code (24) to enable exchange of energy and/or reader data and/or device data between the reader (2) and the IoT device (4), **characterized in that**
the processing unit (22) of tag (14) processes an update function to update the application code (24) in the first non-volatile memory area (23) with a computer (25) of the system (13) connected to the cable connector (19) only during the update function and that the tag (14) comprises a second non-volatile memory area (26) which stores a pre-compiled library of commands (27) used in the application code (24) for an on-chip command interpreter, wherein that the hardware related processing of commands in the application code (24) is realized with the pre-compiled library of commands stored in the second non-volatile memory area (26), and wherein that the processing unit (22) that processes the update function of tag (14) is built to protect the second non-volatile memory area (26) from unauthorized updates by the computer (25).

2. System (13) according to claim 1, wherein the computer (5) processes a high-level script editor to draft application code (24) including commands of the pre-compiled library stored in the second non-volatile memory (27) and which computer (5) is built to convert the high-level script into the binary form of the application code (24) to be stored in the first non-volatile memory area (23).

3. System (13) according to claim 1 or 2, wherein the processing unit (22) of tag (14) that processes the update function is built to protect the second non-volatile memory area from unauthorized updates or prohibits updates at all.

4. System (13) according to any of the claims 1 to 3, wherein the tag (14) comprises only one physical non-volatile memory to realize the first non-volatile memory area (23) and the second non-volatile memory area (26).

5. System (13) according to any of the claims 1 to 4, wherein processing unit (22) is built to start the processing of the application code (24) based on reader data received from the reader (2) with the receiver module (15) or wherein the processing unit (22) is built to continuously process the application code (24) to enable exchange of data and/or energy between the reader (2) and the IoT device (4).

6. System (13) according to any of the claims 1 to 5, wherein the reader (2) is built to generate and process and wherein the tag (14) is built to process the magnetic field (17) in the RF frequency area with a frequency of 13.56MHz to process Near Field Communication type applications.

7. Tag (14) with a wireless interface (15, 16) and a wired interface (21, 19), which tag (14) comprises:
a wireless interface module with a receiver module (15) and a transmitter module (16), which
receiver module (15) is built to receive energy and reader data from a magnetic field (17) in the RF frequency area of 1 MHz to 100 MHz generated by a reader (2) and which is built to store received reader data in a tag memory (18) of the tag (14) and which
transmitter module (16) is built to modulate the magnetic field (17) to transmit device data stored in the tag memory (18) to the reader (2) and which tag (14) furthermore comprises
a wired interface module (21) with a cable connector (19) to connect a cable (20) between the tag (14) and an IoT device (4) to communicate energy and/or reader data and/or device data between the tag (14) and the IoT device (4), and which tag (14) furthermore comprises a processing unit (22) with a first non-volatile memory area (23) to store application code (24) in binary form, wherein the processing unit (22) is built to process the application code (24) to enable exchange of energy and/or reader data and/or device data between the reader (2) and the IoT device (4), **characterized in that**
the processing unit (22) of tag (14) is built to process an update function to update the application code (24) in the first non-volatile memory area (23) with a computer (25) connected to the cable connector (19) only during the update function and that the tag (14) comprises a second non-volatile memory area (26) which stores a pre-compiled library of commands (27) used in the application code (24) for an on-chip command interpreter, wherein that the hardware related processing of commands in the application code (24) is realized with the pre-compiled library of commands stored in the second non-volatile memory area (26), and wherein that the processing unit (22) that processes the update function of tag (14) is built to protect the second non-volatile memory area (26) from unauthorized updates by the computer (25).
